# EUROPEAN PATENT APPLICATION

(11) **EP 1 804 245 A1**
(43) Date of publication of application: **04.07.2007**
(21) Application number: 06782916.8
(22) Date of filing: 23.08.2006
(51) Int. Cl.: G11B 27/00, G11B 20/10, G11B 20/12, G11B 27/10, H04N 5/85

(54) **RECORDING APPARATUS, RECORDING METHOD, PROGRAM, AND COMPUTER READABLE RECORDING MEDIUM**

(30) Priority: 23.08.2005 JP 2005240809
(71) Applicant: SONY CORPORATION, Tokyo 141-0001 (JP)
(72) Inventor: HIRABAYASHI, Mitsuhiro, Tokyo 1410001 (JP); KAWATE, Fumitaka, Tokyo 1410001 (JP); JINNO, Hiroshi, Tokyo 1410001 (JP); KASHIWAGI, Shigeru, Tokyo 1410001 (JP); OHNO, Masayoshi, Tokyo 1410001 (JP)
(74) Representative: Robinson, Nigel Alexander Julian
(86) International application number: PCT/JP2006/316463
(87) International publication number: WO 2007/023837

(57) **Abstract**

The occurrence of fragments is suppressed in an index file that manages individual contents files recorded on a recording medium. On an optical disk 2, a contents file and an index file that manages each of the contents files are recorded. The index file is formed of attribute information of each of the contents files (including text data of a title, thumbnail image data and so on). When a predetermined contents file is recorded on the optical disk 2, a microcomputer 19 updates an index file so as to register this predetermined contents file in the index file. In this case, the microcomputer 19 secures a predetermined number of continuous slots in fixed length in the index file, and allocates attribute information of this predetermined contents file to the slots. For example, a predetermined number is set to the maximum number of the slots, or to the average number of the slots to be predicted for use in order to register the contents file.

## Description

### Technical Field

The present invention relates to a recording apparatus which records target information and an index file corresponding to the target information on a recording medium, a recording method, a program, and a computer-readable recording medium. More specifically, the invention relates to a recording apparatus and so on in which when an index file is updated, a predetermined number of continuous slots in fixed length is secured in an index file, and attribute information of target information is allocated to the slots so as to register the target information in the corresponding index file in association with the recording of the target information, whereby the occurrence of fragments in the index file is suppressed.

### Background of the Invention

Heretofore, as a method of easily finding a desired file among a plurality of files recorded on a large capacity recording medium, methods using an index file are proposed in Patent Reference 1, Patent Reference 2, Patent Reference 3, etc.

An index file manages individual contents files, and is configured of a set of items of attribute information of the individual contents files or created therefrom. For the attribute information of the contents file, for example, there are thumbnail image data, text data for titles, shot date and time, codec information, face detection information (detected face size, a detected face position, a face score that digitizes the detected face), and so on.

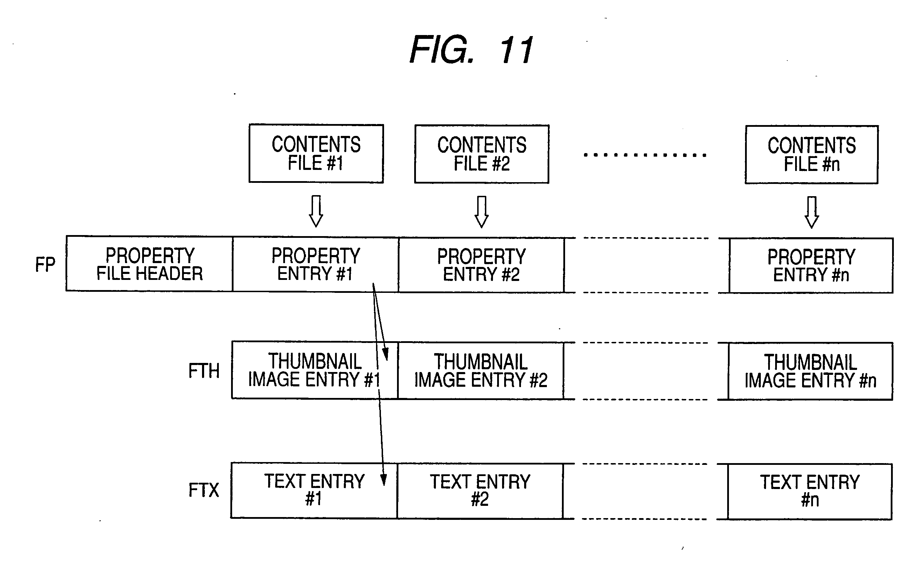

For example, as shown in Fig. 11, the index file is formed of a text file (or a metadata file) FTX, a thumbnail image file FTH, and a property file FP. Attribute information of each of the contents files is arranged as it is split into the text file FTX, the thumbnail image file FTH, and the property file FP.

However, depending on the types of contents files, files might not have any attribute information to be arranged in the text file FTX and the thumbnail image file FTH, and no entry might be provided. In Fig. 11, this case is shown in which as attribute information of each of contents files, there is attribute information to be arranged each in the text file FTX, the thumbnail image file FTH, and the property file FP.

In addition, particularly in this implementation , an index file configured of a property file, a thumbnail image file, and a text file (or the metadata file) is called an AV-Index file.

Here, the text file FTX manages text information (when it is a metadata file, it manages metadata). The thumbnail image file FTH manages image data of a thumbnail. The property file FP manages attribute information (basic attribute information) except attribute information related to the text file FTX or the thumbnail image file FTH, and also manages connection information between the slots of the other files.

In the file FP, a header that indicates an attribute, for example, is arranged at the beginning thereof. On the other hand, in the files FTX and FTH, no header is arranged at the beginning thereof. However, as similar to the file FP, also in the files FTX and FTH, a header that indicates an attribute, for example, may be arranged at the beginning thereof. This configuration is formed in which subsequently to the header, entries formed of attribute information of each of the contents files are continuously arranged (property entry #1, property entry #2, and so on, thumbnail image entry #1, thumbnail image entry #2, and so on, text entry #1, text entry #2, and so on).

To each of the entries of the text file FTX, data is allocated that indicates character strings of a disk title and titles for each of the contents files. To each of the entries of the thumbnail image file FTH, thumbnail image data is allocated that indicates the contents of the disk title and each of the contents files.

Each of the entries of the text file FTX and the thumbnail image file FTH is configured of slots in fixed length. The number of the slots configuring each of the entries is a single slot or a plurality of slots depending on the data volume of attribute information allocated to each of the entries. In addition, since the types of attribute information is varied depending on the types of contents files, no entry might be arranged as described above.

To each of the entries of the property file FP, data is allocated that indicates the disk title and the attribute of each of the contents files. As similar to the text file FTX and the thumbnail image file FTH, the property file FP is configured of the slots in fixed length. In the property file FP, entries are always arranged as corresponding to each of the contents files even though the types of contents files are different variously.

In each of the entries of the property file FP, as management information that indicates the relation with the other entries, management information is set that identifies the corresponding entries to the text file FTX and the thumbnail image file FTH (related information that is shown by arrows in Fig. 11). Furthermore, in the entry configured of a plurality of slots of the property file FP, management information that identifies the subsequent slot is arranged in each of the slots. Furthermore, in each of the entries of the property file FP, information is arranged that identifies the corresponding contents file.

The index file IF is configured as described above. Therefore, for example, data strings recorded in the text file FTX can be reproduced to display the titles of each of the contents files recorded on the recording medium 2 in a list. Furthermore, for example, data strings recorded in the thumbnail image file FTX can be reproduced to display the thumbnail images of each of the contents files recorded on the recording medium 2 in a list.

In addition, the index file IF can be defined for not only these real contents files but also a virtual folder by the files FTX, FTH and FP. In each of the entries of the property file FP, information is arranged that defines the hierarchical structure of a contents file and a virtual folder.

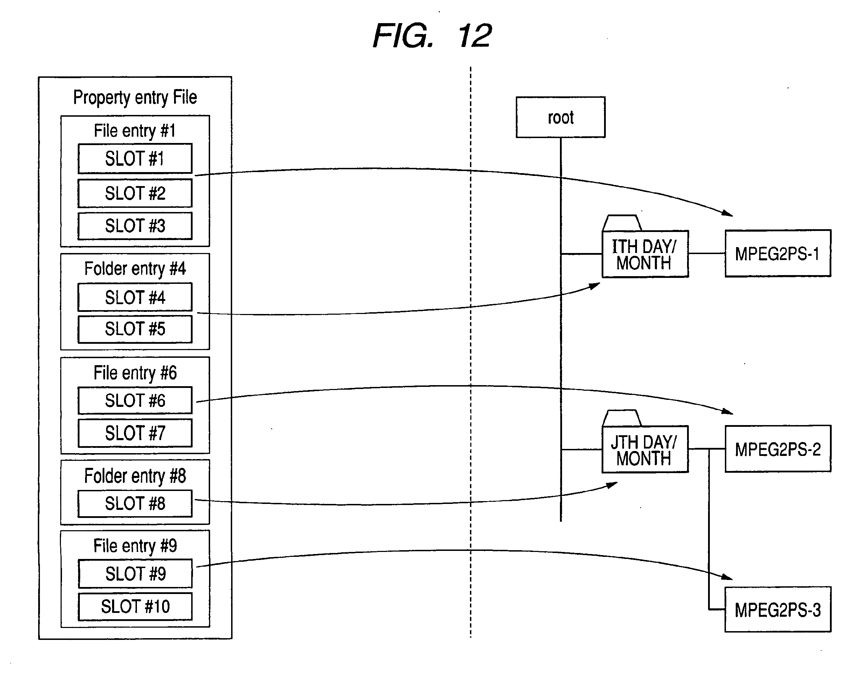

Fig. 12 shows exemplary relations between the property file, the contents file and the virtual folder. In this example, the virtual folder whose shot date and time is on "ith day/month" and the virtual folder whose shot date and time is on "jth day/month" exist in the same layer, the contents file of "MPEG2PS-1" exists in the lower layer of the virtual folder on "ith day/month", and the contents files of"MPEG2PS-2" and "MPEG2PS-3" exist in the lower layer of the virtual folder on "jth day/month".

In accordance with the hierarchical structure like this, as shown in Fig. 12, in the property file, file entry #1, folder entry #4, file entry #6, folder entry #8, and folder entry #9 are formed. In addition, numbers of the individual entries are each considered to be a number for the first slot of slots configuring the entry. In the example shown in the drawing, for convenience sake, numbers of the individual entries are considered to be the minimum number for the slots configuring the entry.

File entries #1, #6 and #9 manage the contents files of "MPEG2PS-1", "MPEG2PS-2", and "MPEG2PS-3", respectively, and the folder entries #4 and #8 manage the virtual folders on "ith day/month" and "jth day/month", respectively.
Patent Reference 1: JP-A-2004-227630
Patent Reference 2: JP-A-2004-227633
Patent Reference 3: JP-A-2005-115815

### Disclosure of the Invention

### Problems that the Invention is to Solve

As described above, when each of the slots is formed in fixed length and a single or a plurality of slots is allocated to a single contents file, the settings of management information are changed to vary the number of the slots variously. In this manner, the number of the slots can be varied variously, whereby the index file can be updated so as to flexibly correspond to the repetition of recording and deletion of the contents file on the recording medium, and the slots arranged in the index file can be used efficiently.

In association with the deletion of the contents file, the corresponding slots of the index file are set to free spaces. Furthermore, in association with the recording of the contents file, attribute information is allocated to free space slots. In this case, when the capacity of the free space is short in recording attribute information in the free space slots, the settings of management information are changed to add slots to which the attribute information is allocated.

However, when slots are added to allocate attribute information in this manner, it is sometimes difficult to allocate attribute information to continuous slots, causing a state that attribute information for a single contents file is recorded in fragmented slots (hereinafter, called "fragments").

As described above, when fragments occur in the index file, it correspondingly takes time to make access to the index file. For example, it takes time to display the contents files recorded on the recording medium in a list to cause deteriorated user usability.

An object of the invention is to suppress the occurrence of fragments in an index file.

### Means for Solving the Problems

The concept of the invention lies in a recording apparatus which records target information and an index file on a recording medium, the target information that contains at least a contents file, a virtual folder or text data, and the index file that manages the target information and that is created of a set of items of attribute information relating to the target information, the recording apparatus including: a recording part operable to record the target information on the recording medium; and an index file updating part operable to update the index file corresponding to target information to be recorded so as to register the target information when the target information is recorded on the recording medium by the recording part, wherein the index file is configured of a plurality of slots in fixed length, and when the index file is updated, the index file updating part secures a predetermined number of continuous slots in fixed length in the index file, and allocates attribute information relating to the target information to be recorded by the recording part to the secured slots in fixed length.

In the invention, the target information that contains at least the contents file, virtual folder or text data and the index file are recorded on the recording medium. The index file manages each item of the target information, and is created of a set of items of attribute information for each item of the target information. The recording part records the target information on the recording medium.

When the target information is recorded on the recording medium by the recording part, the index file recorded on the recording medium is updated by the index file updating part. As described above, the index file is updated in association with the recording of the target information, whereby matching between the target information and the contents file recorded on the recording medium is intended.

The index file is configured to have a predetermined number of continuous slots in fixed length. When the index file is updated so as to register the target information by the index file updating part, a predetermined number of continuous slots in fixed length are secured in the index file, and the attribute information of the target information is allocated to a predetermined number of the continuous slots in fixed length.

As described above, when the index file is updated in association with the recording of the target information, a predetermined number of the continuous slots in fixed length are secured in the index file, and the attribute information of the target information is allocated to a predetermined number of the continuous slots in fixed length. Thus, the occurrence of fragments in an index file can be suppressed.

For example, a predetermined number is set to the maximum number of the slots to be expected for use in order to register the target information, whereby the occurrence of fragments in an index file can be surely prevented.

More specifically, "the maximum number of the slots" that is to be set as a predetermined number is the minimum number of slots that can store the maximum data volume of data which is the greatest data for registration target (generally a folder), or the minimum number of slots that can store data when the data volume for registration is known in advance such as the contents file. On the other hand, when the data volume is varied depending on the number of contents files to be registered as a folder, a predetermined number is set to the number of slots that can store the data volume when the maximum number of files to be possibly registered in a folder as a recording apparatus are registered.

Furthermore, for example, a predetermined number is set to the average number of the slots to be expected for use in order to register the target information, whereby the occurrence of fragments in an index file can be reduced while the generation of free slots is suppressed. In this case, a recording area is sometimes short for registration of target information. When a recording area is short as described above, the index file updating part secures a predetermined number of slots in fixed length in addition to a predetermined number of the continuous slots in fixed length in order to register the target information.

Furthermore, for example, a predetermined number is set to the average number of the slots that have been used in the past in order to register the target information, whereby the occurrence of fragments in an index file can be reduced while the generation of free slots is suppressed in accordance with user's use conditions. In this case, a recording area is sometimes shorted for registration of target information. When a recording area is shorted as described above, the index file updating part secures a predetermined number of the slots in fixed length in addition to a predetermined number of the continuous slots in fixed length in order to register the target information.

Furthermore, for example, a predetermined number is set to the average number of the slots in fixed length that have been used in order to register each item of the target information and recorded in the header of the index file, whereby the occurrence of fragments in an index file can be reduced while the generation of free slots is suppressed in accordance with user's use conditions.

In the header of the index file, the average number of the slots in fixed length that have been used in order to register the target information is recorded by the index file updating part every time when target information is registered in the index file, for example. The average number is recorded in the header of the index file as described above, whereby the average number of the slots that have been used in the past can be obtained easily.

For example, when the index file is updated so as to register target information, the index file updating part records information that can identify a free space is recorded in the beginning slot in fixed length among a predetermined number of the continuous slots in fixed length. The information that can identify a free space is recorded as described above, whereby the process can be accelerated that confirms the data volume to be possibly added to a predetermined number of the continuous slots in fixed length.

### Advantage of the Invention

According to the invention, when the index file is updated so as to register target information in the index file in association with the recording of the target information, a predetermined number of continuous slots in fixed length are secured in the index file, and attribute information of the target information is allocated to a predetermined number of the continuous slot entries in fixed length, which can suppress the occurrence of fragments in an index file.

### Brief Description of the Drawings

Fig. 1 shows a block diagram depicting the configuration of an optical disk apparatus;
Fig. 2 shows a diagram depicting the configuration of individual slots of a property file;
Fig. 3 shows a diagram depicting the configuration of actual data portions of each of the slots of the property file;
Fig. 4 shows a diagram illustrative of the contents of property data;
Fig. 5 shows a diagram depicting an example of securing slots when slots are secured based on the maximum number of the slots to be predicted for use in order to register a contents file;
Fig. 6 shows a flow chart depicting a series of process procedures performed by a system control microcomputer to update an index file;
Fig. 7 shows a diagram depicting a series of process procedures performed by the system control microcomputer to update an index file;
Fig. 8 shows a diagram depicting an example of securing slots when slots are secured based on the average number of the slots that have been used in the past in order to register a contents file;
Fig. 9 shows a flow chart depicting a series of process procedures performed by a system control microcomputer to update an index file;
Fig. 10 shows a diagram illustrative of recording the average number and the maximum number of the slots that have been actually used in the past in the header of a property file;
Fig. 11 shows a diagram illustrative of a text file, a thumbnail image file, and a property file configuring an index file; and
Fig. 12 shows a diagram depicting exemplary correspondences between a property file, a virtual folder and a contents file.

### Description of Reference Numerals and Signs

- 1: optical disk apparatus,
- 2: optical disk
- 11: video encoder
- 12: audio encoder
- 13: video decoder
- 14: audio decoder
- 15: file generator
- 16: file decoder
- 17, 20: memory
- 18: memory controller
- 19: system control microcomputer
- 21: error correction encoder/decoder
- 22: drive control microcomputer
- 23: data modulator and demodulator
- 24: magnetic field modulation driver
- 26: manipulating part

### Mode for Carrying out the Invention

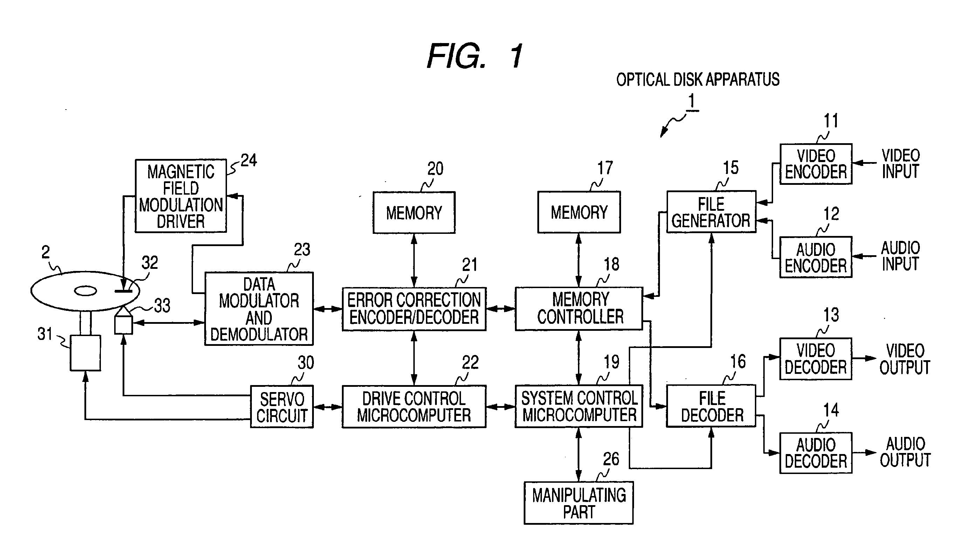

An embodiment of the invention will be described. Fig. 1 shows the configuration of an optical disk apparatus 1 as an embodiment.

In the optical disk apparatus 1, video signals and audio signals of a subject are acquired by a means for shooting and a means for acquiring sound, not shown, and the shot result formed of the video signals and the audio signals are recorded on an optical disk 2 as a contents file. Furthermore, in the optical disk apparatus 1, the contents file recorded on the optical disk 2 is reproduced and outputted by a means for display formed of a liquid crystal display panel and a means for outputting sound formed of a speaker, and also outputted to an external device. Furthermore, in the optical disk apparatus 1, the video signals and the audio signals are encoded in an MPEG (Moving Picture Experts Group) format, and then recorded in a predetermined file format on the optical disk 2.

The optical disk apparatus 1 has the optical disk 2, a video encoder 11, an audio encoder 12, a video decoder 13, an audio decoder 14, a file generator 15, a file decoder 16, a memory 17, a memory controller 18, a system control microcomputer (hereinafter, called a "system control microcomputer") 19, a memory 20, an error correction encoder/decoder 21, a drive control microcomputer (hereinafter, called a "drive control microcomputer") 22, a data modulator and demodulator 23, a magnetic field modulation driver 24, a manipulating part 26, a servo circuit 30, a spindle motor 31, a magnetic field head 32, and an optical pickup 33.

The video encoder 11 applies the video signals from the shot result to analog-to-digital conversion to generate video data, encodes the video data in accordance with the MPEG format, and outputs an elementary stream of the video data. The audio encoder 12 applies the audio signals from the shot result to analog-to-digital conversion to generate audio data, encodes the audio data in accordance with the MPEG format, and outputs an elementary stream of the audio data.

In recording, the file generator 15 multiplexes the elementary streams outputted from the video encoder 11 and the audio encoder 12, and creates a contents file in a predetermined file format under control by the system control microcomputer 19.

In recording and reproduction, the memory controller 18 switches the operations under control by the system control microcomputer 19. In recording, the memory controller 18 sequentially records and temporarily stores data strings of the contents file outputted from the file generator 15 and various items of data outputted from the system control microcomputer 19 in the memory 17, and outputs the stored data in accordance with the subsequent process performed by the error correction encoder/decoder 21. Furthermore, in reproduction, the memory controller 18 sequentially records and temporarily stores output data from the error correction encoder/decoder 21 in the memory 17, outputs the data string of the contents file to the file decoder 16, and outputs various items of data to the system control microcomputer 19.

In recording and reproduction, the error correction encoder/decoder 21 switches the operations under control by the system control microcomputer 19. In recording, the error correction encoder/decoder 21 temporarily records output data from the memory controller 18 in the memory 20, and adds error correcting code. Furthermore, in recording, the error correction encoder/decoder 21 reads data stored in the memory 20 in a predetermined order, and outputs interleaved data to the data modulator and demodulator 23.

Furthermore, in reproduction, the error correction encoder/decoder 21 temporarily records data outputted from the data modulator and demodulator 23 in the memory 20 in a predetermined order to interleave the data as well as corrects error in accordance with the error correcting code added in recording. Furthermore, in reproduction, the error correction encoder/decoder 21 reads data thus stored in the memory 20 in the same order as in recording, and outputs the date to the memory controller 18.

In recording and reproduction, the data modulator and demodulator 23 switches the operations under control by the system control microcomputer 19. In recording, the data modulator and demodulator 23 converts output data from the error correction encoder/decoder 21 into a serial data string, and then modulates and outputs it to the magnetic field modulation driver 24 or the optical pickup 33. Furthermore, in reproduction, the data modulator and demodulator 23 reproduces clocks from reproduction signals outputted from the optical pickup 33, and identifies the reproduction signals in binary form with reference to the clocks for demodulation, whereby it obtains reproduction data corresponding to the serial data string generated in recording, and outputs the reproduction data to the error correction encoder/decoder 21.

In recording, the magnetic field modulation driver 24 drives the magnetic field head 32 in response to the output signal from the data modulator and demodulator 23 under control by the system control microcomputer 19 when the optical disk 2 is a magneto-optical disk. The magnetic field head 32 is held in such a way that it faces the optical pickup 33 as the optical disk 2 is inbetween, and applies a modulated magnetic field at the position onto which the optical pickup 33 applies a laser beam in accordance with output data from the data modulator and demodulator 23. Accordingly, the optical disk apparatus 1 records a contents file and the like on the optical disk 2 by a technique of thermo-magnetic printing when the optical disk 2 is a magneto-optical disk.

The optical disk 2 is a rewritable optical disk such as a magneto-optical disk (MO: Magneto Optical disk) and a phase change disk. Under control by the servo circuit 30, the spindle motor 31 rotates and drives the optical disk 2 under the conditions including constant linear velocity (CLV), constant angular velocity (CAV), and zone constant linear velocity (ZCLV), depending on the type.

The servo circuit 30 controls the operation of the spindle motor 31 based on various signals outputted from the optical pickup 33. Furthermore, the servo circuit 30 performs tracking control and focus control over the optical pickup 33 based on various signals outputted from the optical pickup 33, performs seek control over the optical pickup 33 and the magnetic field head 32, and performs process for focus search, etc.

The drive control microcomputer 22 controls the operation of the servo circuit 30 such as seeks in accordance with an instruction from the system control microcomputer 19.

The optical pickup 33 applies a laser beam onto the optical disk 2, receives the returning light by a light receiving element, and computes the result of the received light by the light receiving element, whereby it generates and outputs various control signals, or outputs reproduction signals that vary the signal level depending on pit strings and mark strings formed on the optical disk 2.

Furthermore, the optical pickup 33 switches the operations under control by the system control microcomputer 19, and in recording, it intermittently boots the light quantity of the laser beam to be applied onto the optical disk 2 when the optical disk 2 is a magneto-optical disk. In this case, the optical disk apparatus 1 records the contents file and the like on the optical disk 2 in accordance with a so-called pulse train mode. Furthermore, the optical pickup 33 boots the light quantity of the laser beam to be applied onto the optical disk 2 from the light quantity in reproduction to the light quantity in write in accordance with output data from the data modulator and demodulator 23 when the optical disk 2 is a phase change disk and the like. In this case, the optical disk apparatus 1 records the contents file and the like on the optical disk 2 in application of a technique of thermal printing.

The file decoder 16 receives data in the contents file outputted from the memory controller 18, and breaks the data into the elementary streams of video data and audio data for output. The video decoder 13 decompresses data in the elementary stream of video data outputted from the file decoder 16, and outputs it to a means for display and external devices, not shown. The audio decoder 14 decompresses data in the elementary stream of audio data outputted from the file decoder 16, and outputs it to a means for outputting sound and external devices, not shown.

The manipulating part 26 is configured of various manipulating elements of the optical disk apparatus 1, a touch panel disposed on a liquid crystal display panel, and so on, and sends various manipulations done by a user to the system control microcomputer 19.

The system control microcomputer 19 is a microcomputer which controls the overall operation of the optical disk apparatus 1, and controls the overall operation by executing a predetermined process program recorded on a memory, not shown. In the embodiment, a process program for the system control microcomputer 19 is provided by installing it beforehand in the optical disk apparatus 1. However, instead of the installation beforehand in this manner, the process program may be provided by download via a network such as the Internet, or by being recorded in various recording media such as an optical disk, a magnetic disk and a memory card.

For example, when the system control microcomputer 19 executes the process program to detect the loading of the optical disk 2, it allows the optical pickup 33 to seek the inner most track of the optical disk 2, and reproduces management information about a file management system of the optical disk 2. Furthermore, the system control microcomputer 19 acquires the reproduced management information from the memory controller 18, and stores it in the incorporated memory.

The system control microcomputer 19 stores management information in the incorporated memory in this manner, whereby it detects the addresses of the individual files and the free space recorded on the optical disk 2. Furthermore, the system control microcomputer 19 reproduces the index file recorded on the optical disk 2 in accordance with the search result of the management information, represents various contents files recorded on the optical disk 2 for a user, and accepts manipulations done by the user. In addition, the index file thus reproduced from the optical disk 2 is stored in the memory incorporated in the system control microcomputer 1, or in the memory 17. In the embodiment, the index file is stored in the incorporated memory.

Furthermore, when a user manipulation instructs that the shot result should be recorded, the system control microcomputer 19 detects free space in accordance with management information stored in the incorporated memory, allows the optical pickup 33 to seek the free space, and records a contents file as the shot result on the optical disk 2.

Furthermore, the system control microcomputer 19 updates management information stored in the incorporated memory so as to correspond to the recording of the contents file, and updates management information recorded on the optical disk 2 in accordance with the updated management information at the time when the optical disk 2 is ejected, for example. In update of the management information, the system control microcomputer 19 performs it by outputting the management information stored and updated in the incorporated memory to the error correction encoder/decoder 21 through the memory controller 18.

Furthermore, the system control microcomputer 19 records another contents file on the optical disk 2 when a user manipulation instructs that the contents file should be edited and instructs that another contents file should be recorded as the edit result.

When the system control microcomputer 19 records the contents file on the optical disk 2 as described above, it outputs various items of information necessary to generate the contents file to the file generator 15. Furthermore, the system control microcomputer 19 acquires information necessary to generate the index file through the video encoder 11, the audio encoder 12 and the file generator 15. Then, the system control microcomputer 19 updates the index file stored in the incorporated memory in accordance with the acquired information and information to be outputted to the file generator 15 so as to correspond to the recording of the contents file on the optical disk 2, and updates the index file recorded on the optical disk 2 in accordance with data in the updated index file.

In this case, the system control microcomputer 19 additionally registers the entry corresponding to the contents file recorded on the optical disk 2 in the index file, whereby it updates the index file so as to correspond to the recording of the contents file stored in the incorporated memory.

The operation of the optical disk apparatus 1 shown in Fig. 1 will be described briefly.

When the optical disk 2 is loaded after the power of the apparatus main body is turned on, or when the power is turned on with the optical disk 2 loaded, the optical pickup 33 is controlled so as to seek the inner most track of the optical disk 2, and management information about the file management system is reproduced. The management information is stored in the memory incorporated in the system control microcomputer 19 through the memory controller 18. In the system control microcomputer 19, the addresses of the individual files, the free space and the like recorded on the optical disk 2 are detected in accordance with management information thus stored in the incorporated memory. Furthermore, after management information is thus acquired, the index file is reproduced from the optical disk 2 based on the search result of the management information. The index file is stored in the memory incorporated in the system control microcomputer 19.

The operation in recording in which the contents file shot by the means for shooting is recorded on the optical disk 2 will be described.

Video data and audio data acquired by the means for shooting and the means for acquiring sound are encoded by the video encoder 11 and the audio encoder 12, respectively, and then they are supplied to the file generator 15. In the file generator 15, video and audio elementary streams obtained by the video encoder 11 and the audio encoder 12 are multiplexed to generate a contents file in a predetermined file format.

The contents file is recorded in a predetermined free space in the optical disk 2 through the recording system formed of the memory controller 18, the error correction encoder/decoder 21, the data modulator and demodulator 23, the magnetic field modulation driver 24, and the optical pickup 33.

In parallel with processing the recording of the contents file, thumbnail image data is created from video data. The system control microcomputer 19 updates data in the index file stored in the incorporated memory in accordance with the thumbnail image data, the file name of the contents file and so on that are attribute information of the contents file to be recorded.

As described above, after the contents file is recorded on the optical disk 2, the index file recorded on the optical disk 2 is updated based on the data in the index file which is updated so as to correspond to the recording of the contents file and stored in the memory incorporated in the system control microcomputer 19.

Furthermore, management information stored in the memory incorporated in the system control microcomputer 19 is updated so as to correspond to the recording of the contents file, and management information recorded on the optical disk 2 is updated based on the updated management information after the index file is updated, or when the optical disk 2 is ejected, etc.

Next, the operation in reproduction in which a predetermined contents file is reproduced with reference to the display of the contents file recorded on the optical disk 2 in a list will be described.

When a user instructs that the contents file should be displayed in a list, thumbnail image data corresponding to each of the contents files is sequentially acquired from data in the index file stored in the memory incorporated in the system control microcomputer 19, sub-nail image data for listing is supplied from the system control microcomputer 19 to the means for display, not shown, through the file decoder 16 and the video decoder 13, and sub-nail images for each of the contents files recorded on the optical disk 2 are shown in a list on the means for display.

As described above, when a user manipulation selects a predetermined thumbnail image to instruct reproduction in the state that the thumbnail images are displayed in a list on the means for display, the contents file corresponding to a predetermined thumbnail image selected from the optical disk 2 is reproduced based on data in the index file and management information of the management system stored in the incorporated memory under control by the system control microcomputer 19. In this case, the contents file reproduced from the optical disk 2 is obtained through the optical pickup 33, the data modulator and demodulator 23, the error correction encoder/decoder 21, and the memory controller 18. Then, the reproduced contents file is broken into the elementary streams of video data and audio data by the file decoder 16, and then each of the elementary streams is decoded and outputted by the video decoder 13 and the audio decoder 14.

Next, the operation in deletion in which a predetermined contents file is deleted with reference to the list of the contents files recorded on the recording medium 2 will be described.

As described above, when a user manipulation selects a predetermined thumbnail image and instructs that it should be deleted in the state that the thumbnail images are displayed in a list on the means for display, the contents file corresponding to a predetermined thumbnail image selected from the optical disk 2 is deleted based on data in the index file and management information of the management system stored in the incorporated memory under control by the system control microcomputer 19.

In parallel with processing the deletion of the contents file, the system control microcomputer 19 updates data in the index file stored in the incorporated memory. Then, as described above, after the contents file is deleted from the optical disk 2, the index file recorded on the optical disk 2 is updated based on data in the index file which is updated so as to correspond to the recording of the contents file and stored in the memory incorporated in the system control microcomputer 19.

Furthermore, management information stored in the memory incorporated in the system control microcomputer 19 is updated so as to correspond to the deletion of the contents file, and management information recorded on the optical disk 2 is updated in accordance with the updated management information after the index file is updated, or when the optical disk 2 is ejected, etc.

Next, the update process for the index file performed by the system control microcomputer 19 described above will be further explained.

As described above, when a predetermined contents file is recorded on the optical disk 2, the system control microcomputer 19 updates the index file so as to additionally register this predetermined contents file. In this case, the system control microcomputer 19 secures a predetermined number of continuous slots in fixed length in the index file, and allocates attribute information of a predetermined contents file described above to a predetermined number of the continuous slots in fixed length.

A predetermined number of the slots in fixed length described above is set to the number of slots conformed to the specifications of the optical disk apparatus 1. In the embodiment, it is considered that this predetermined number is the maximum number of slots to be predicted for use in order to register the contents file in the index file. More specifically, "the maximum number of slots" to be set as a predetermined number is the minimum number of slots that can store the maximum data volume of data having the largest data of a target for registration (generally a folder), or the minimum number of slots that can store data when the data volume to be registered is known in advance as a contents file. On the other hand, in the case in which the data volume is varied depending on the number of contents files to be registered such as folders, it is the number of slots that can store the data volume when the maximum number of files to be registered in a folder as a recording apparatus is registered.

As similar to the case described with Fig. 11, the index file in the embodiment is configured of a text file E1, a thumbnail image file E2, and a property file E3. Attribute information of each of the contents files is split into a text file, a thumbnail image file, and a property file, and arranged in the individual files. Furthermore, each of the files is configured in which entries formed of attribute information of each of the contents files are continuously arranged. Each of the entries is configured of slots in fixed length.

To each of the entries of the property file E3, data is allocated that indicates the disk title and the attribute of each of the contents files. Furthermore, in each of the entries of the property file E3, management information that identifies the corresponding entries of the text file E1 and the thumbnail image file E2 is arranged as management information that indicates the relation with the other entries. Furthermore, when an entry is configured of a plurality of slots of the property file E3, management information that identifies the subsequent slot is arranged in each of the slots. Furthermore, in each of the entries of the property file E3 (parity entry), information is arranged that identifies the corresponding contents file. Moreover, in each of the entries of the property file E3, information is arranged that defines the hierarchical structure of the contents file and the virtual folder.

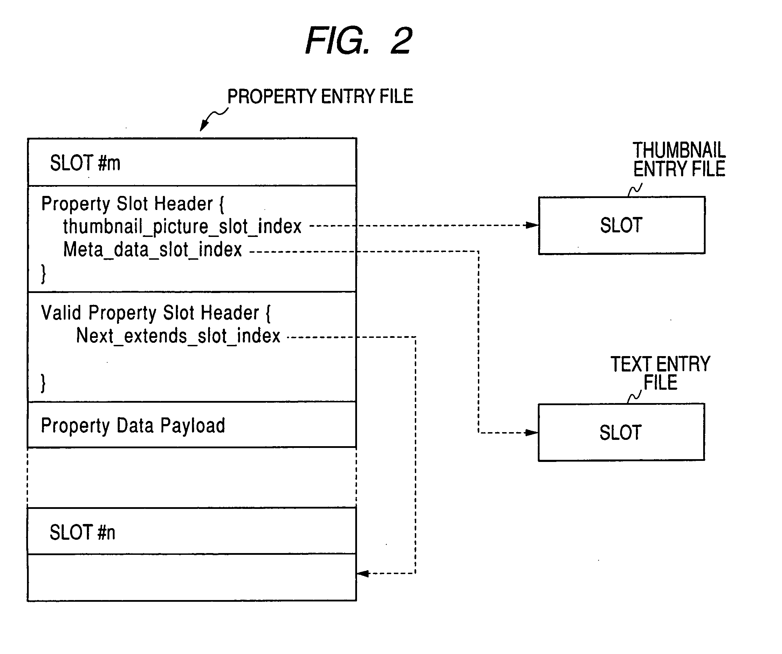

Fig. 2 shows the configuration of the individual slots of the property file. In each of the slots of the property file, a header (Property Slot Header) is arranged at the beginning thereof. In the header, an index that indicates the corresponding slot of the thumbnail image file (thumbnail picture slot index) and an index that indicates the corresponding slot of the text file (Meta data slot index) are arranged as management information that indicates the slots of the other files relating to the same contents file.

Furthermore, when a plurality of slots are allocated to a single contents file, in the plurality of the slots except the tail slot, an index that indicates the subsequent slot (Next extends slot index) is arranged in the subsequent header (Valid Property Slot Header). The index configures management information that defines the relation with the other slots of the property file relating to the same contents file.

For example, when attribute information relating to a single contents file is allocated in three slots of the thumbnail image file, an index that indicates the slot of the corresponding thumbnail image file (thumbnail picture slot index) is each arranged in the three slots arranged in the property file. Furthermore, in the three slots of the property file, an index that indicates the subsequent slot (Next extends slot index) is arranged in two slots on the beginning side, and the relation of the three slots is shown.

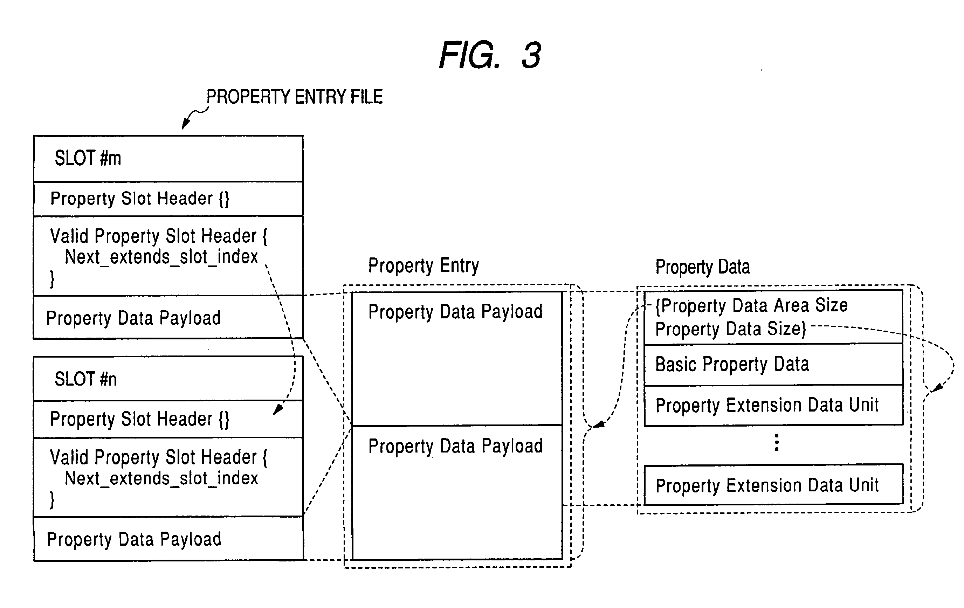

Fig. 3 shows the configuration of (actual) data portions (Property Data Payload) of each of the slots of the property file. When an area subsequent to the two headers described above is allocated to the (actual) data portion (Property Data Payload) of the property entry in each of the slots and a plurality of slots are allocated to a single contents file, property data (Property Data) formed of attribute information relating to the contents file is sequentially allocated to the actual data portions of a plurality of the slots.

Furthermore, in property data (Property Data), the overall size (Property Data Area Size) of the (actual) data portion (Property Data Payload) of a plurality of the slots, the size of property data allocated to the (actual) data portion (Property Data Payload) of a plurality of the slots (Property Data Size), and basic data of the property entry configured of a plurality of the slots (Basic Property Data) are arranged as well as a group of extension data (Property Extension Data Unit) is added one by one in accordance with the extension of the function of the property entry.

Here, the overall size (Property Data Area Size) and the size of property data (Property Data Size) are recorded in the (actual) data portion of the beginning slot of the property entry, and the free space of the property entry can be identified based on the sizes. In other words, the sizes configure information that can identify the free space of the property entry.

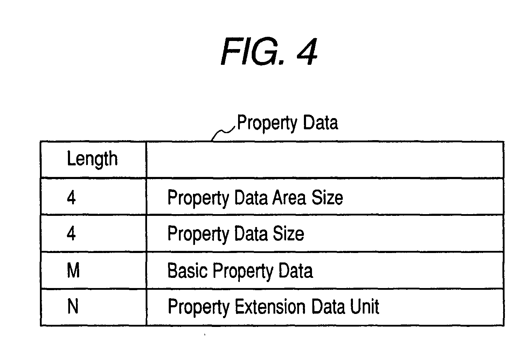

In addition, Fig. 4 depicts the renewed description of property data (Property Data) shown in Fig. 3.

The group of extension data described above has a function that defines the reference relation between the contents files on the index file, for instance.

For example, when a single contents file is referenced by a plurality of contents files, a group of extension data (Property Extension Data Unit) is arranged by the number of the plurality of the contents files.

Depending on the presence and the number of the extension functions, the data volume of the property entry is varied. Therefore, the number of the slots for the property file is to be varied, which is required to record a single contents file. Furthermore, also for basic data (Basic Property Data), the data volume is varied depending on the contents file. As described above, the property entry is formed of various data volumes.

In the embodiment, the system control microcomputer 19 accepts a user manipulation to add a group of extension data (Property Extension Data Unit) according to a certain restriction. For example, this certain restriction is a restriction of the number of contents files to reference to a single contents file.

As described above, in the embodiment, the system control microcomputer 19 secures a predetermined number of continuous slots (the maximum number of the slots to be predicted for use in order to register the contents file in the index file) in the index file when a predetermined contents file is to be registered in the index file. For example, the maximum number of the slots to be expected for use is the maximum number of the slots to be predicted based on a certain restriction relating to the addition of a group of extension data described above.

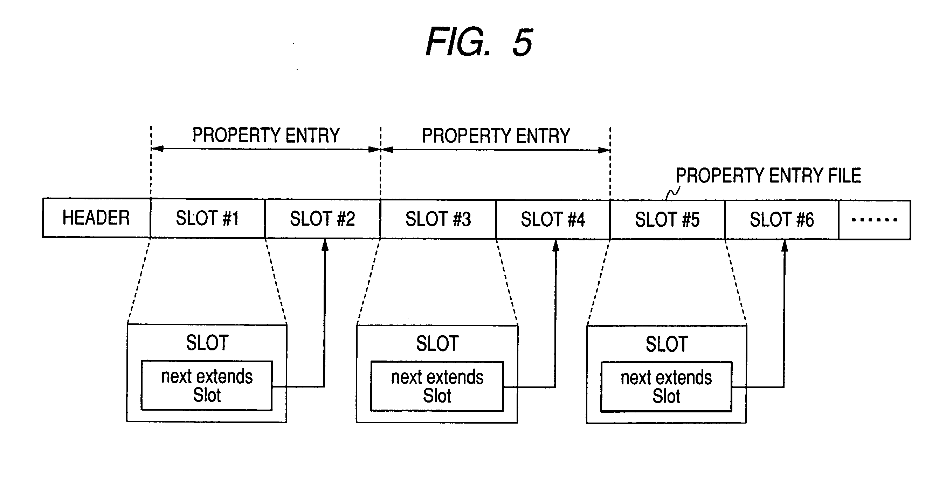

Fig. 5 shows an example of securing slots when slots are secured based on the maximum number of the slots to be predicted for use in order to register a contents file. Here, the maximum number of the slots is considered to be two. In this case, the system control microcomputer 19 sequentially separates the continuous slots two by two to form the property entry. Then, in each of the property entries, an index (Next extends slot index) is arranged in the slot on the beginning side so as to indicate the subsequent slot from the slot on the beginning side. In this case, even though two slots are not required to register the contents file, two continuous slots are secured when the contents file is registered.

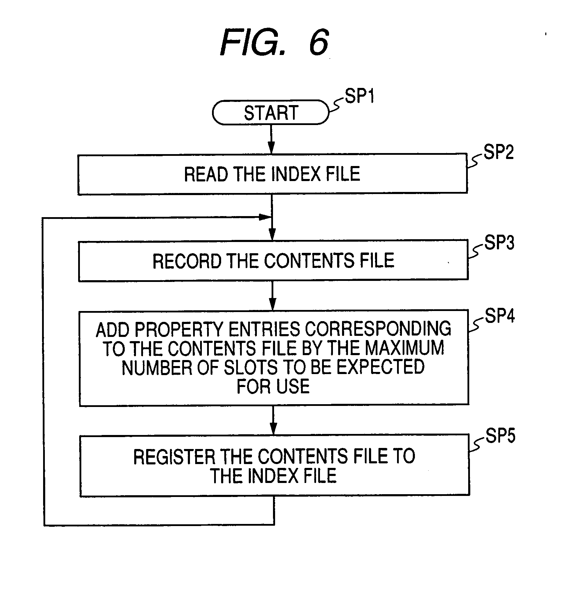

A flow chart shown in Fig. 6 depicts a series of the process procedures performed by the system control microcomputer 19 to update an index file.

For example, by installing the optical disk 2, the system control microcomputer 19 goes from Step SP1 to Step SP2. At Step SP2, the system control microcomputer 19 acquires the index file recorded on the optical disk 2, and stores it in the memory incorporated therein. Then, at Step SP3, in response to a recording instruction done by a user manipulation, the system control microcomputer 19 records the contents file on the optical disk 2.

Subsequently, at Step SP4, the system control microcomputer 19 adds the entry (property entry) configured of a predetermined number of continuous slots in fixed length (the maximum number of the slots to be expected for use) in the tail of the property file of the index file stored in the incorporated memory. In addition, at this time, also in the other files, the required number of continuous slots in fixed length is each added.

Then, at Step ST5, as described above, the system control microcomputer 19 allocates the attribute information of the contents file recorded on the optical disk 2 to the added slots, and registers the recorded contents file in the index file stored in the incorporated memory. Furthermore, the system control microcomputer 19 updates the index file recorded on the optical disk 2 in accordance with data in the index file stored in the incorporated memory.

When a user manipulation further instructs that the contents file should be recorded, the system control microcomputer 19 returns to Step SP3 to repeat the process. The system control microcomputer 19 secures continuous slots by the maximum number of the slots to be expected for use, and registers the contents file every time when the contents file is recorded.

When a user manipulation instructs that the contents files should be displayed in a list, the system control microcomputer 19 displays the contents files recorded on the optical disk 2 in a list with the thumbnail image, the title and so on based on the index file stored in the incorporated memory. Furthermore, in the displayed list, when a user manipulation selects a predetermined contents file and instructs that it should be deleted, the system control microcomputer 19 deletes this predetermined contents file from the optical disk 2, and sets the slots of the index file for a predetermined contents file to the free space.

Furthermore, when the system control microcomputer 19 performs the process of Step SP4 described above, it determines whether there is a free space. When there is a free space, it registers the entry of the contents file recorded in the free space without adding any new slots. In this case, the slots are continued by the maximum number of the slots to be expected for use in the free space, and no fragments occur in the index file.

Furthermore, in the displayed list described above, when a user manipulation selects a predetermined contents file and instructs that it should be reproduced, the system control microcomputer 19 reproduces this predetermined contents file from the optical disk 2, and presents it to a user. At this time, when a user manipulation instructs that the contents file should be edited, the system control microcomputer 19 searches the property entry corresponding to the contents file, and detects the overall size (Property Data Area Size) of the (actual) data portion (Property Data Payload) and the size (Property Data Size) of (actual) data allocated to the (actual) data portion (Property Data Payload) recorded in the property entry. Furthermore, the system control microcomputer 19 subtracts the size (Property Data Size) of (actual) data from the overall size (Property Data Area Size), and detects the free space of the property entry.

When there is enough free space, the system control microcomputer 19 accepts the editing operation by a user manipulation. Furthermore, the system control microcomputer 19 records the edited contents file on the optical disk 2 in the form that external reference is made to the original contents file. Furthermore, the system control microcomputer 19 registers the contents file in the index file so as to correspond to the recording of the edited contents file. In this case, for the original contents file, a group of extension data (Property Extension Data Unit) is added to the property entry to register that the edited contents file is made to external reference, and the size (Property Data Size) of (actual) data is updated so as to correspond to this registration.

When there is no enough free space described above, the system control microcomputer 19 shows a message that the edit result cannot be stored. Then, by user' s consent, the editing operation by a user is accepted. Furthermore, the editing process is ended in response to a user manipulation without recording any edit result.

In the optical disk apparatus 1 shown in Fig. 1, when the index file is updated in association with recording a predetermined contents file, the entry configured of the continuous slots in fixed length by the maximum number of the slots to be expected for use in order to register the contents file is secured, and attribute information of a predetermined contents file is allocated to the entry. Therefore, according to the optical disk apparatus 1, the occurrence of fragments in an index file can be surely prevented. For example, the time can be shortened for acquiring attribute information of a single contents file from a plurality of the slots of the index file. A time increase that is needed to display the contents files in a list is prevented to improve user usability.

Furthermore, in the optical disk apparatus 1 shown in Fig. 1, the overall size (Property Data Area Size) of actual data portions (Property Data Payload) formed of a plurality of the slots configuring the property entry and the size (Property Data Size) of (actual) data allocated to the (actual) data portion (Property Data Payload) formed of a plurality of the slots are recorded in the (actual) data portion of the beginning slot of the property entry, and the free space of the property entry can be identified based on these two sizes. Therefore, according to the optical disk apparatus 1 shown in Fig. 1, the process that confirms the data volume to be added to the property entry can be performed easily at high speed.

In addition, in the embodiment described above, for the slots securing the entry formed of predetermined number of the continuous slots in fixed length in the index file when a predetermined contents file is registered in the index file, it is shown that a predetermined number thereof is the maximum number of the slots to be expected for use in order to register the contents file. However, this predetermined number may be set to the average number of the slots to be expected for use in order to register the contents file.

When a predetermined number is set to the maximum number of the slots to be expected for use in order to register the contents file as in the embodiment described above, a large number of slots are generated for no use in recording attribute information to increase free slots, and many slots are wasted. On the other hand, a predetermined number is registered to the average number of the slots to be expected for use in order to register the contents file, whereby free slots can be reduced, and wasted slots can be decreased. In this case, the average number of the slots as a predetermined number can be set in the optical disk apparatus 1 in advance. However, when a predetermined number is set to the average number of the slots to be expected for use in order to register the contents file in this manner, a recording area is sometimes short for registration of the contents file. In this case, the system control microcomputer 19 additionally registers a predetermined number of the slots in the index file as well as arranges an index that indicates the subsequent slot (Next extends slot index) so as to indicate the slots additionally registered.

As described above, when a recording area is short for registration of the contents file, fragments sometimes occur in the index file because a predetermined number of the slots are additionally registered in the index file. However, even though fragments occur as described above, the contents file is registered to have continuous slots by the average number of the slots to be expected for use in order to register the contents file. Therefore, as compared with the case in which entries are not secured by a predetermined number of continuous slots as before, the occurrence of fragments can be reduced.

Furthermore, in the embodiment described above, for the slots securing the entry configured of a predetermined number of the continuous slots in fixed length in the index file when a predetermined contents file is registered in the index file, it is shown that a predetermined number is the maximum number of the slots to be expected for use for registration of the contents file. However, a predetermined number may be set to the average number of the slots that have been used in the past for registration of the contents.

In this case, the system control microcomputer 19 properly computes the average number of the slots that have been used in the past, and changes the number of the slots to be secured depending on the computed result.

As in the embodiment described above, when a predetermined number is set to the maximum number of the slots to be expected for use in order to register the contents file, a large number of slots are generated that are not for use in recording attribute information to increase free slots, and wasted slots are increased.

Furthermore, a user may frequently edit the contents file formed of the shot result and record the edit result, or in reverse, a user may not edit the shot result at all. For the user who frequently performs edits to record the edit result, the data volume to be allocated to the property entry is increased. Therefore, when a predetermined number is set to the average number of the slots to be expected for use in order to register the contents file, many fragments are to, occur.

In reverse to this, when no edit is performed at all, the data volume to be allocated to the property entry is not increased. Therefore, when a predetermined number is set to the average number of the slots to be expected for use in order to register the contents file, wasted free slots are increased.

A predetermined number is set to the average number of the slots that have been actually used in the past in order to register the contents file, whereby the occurrence of fragments in an index file can be decreased while the generation of free slots is suppressed in accordance with user's use conditions.

At first, the system control microcomputer 19 sets a predetermined number to the average number of the slots to be expected for use, and starts recording the contents file. After that, the system control microcomputer 19 properly computes the average number of the slots to be actually used in association with recording the contents file, and properly changes the number of the slots to be secured depending on the computed result.

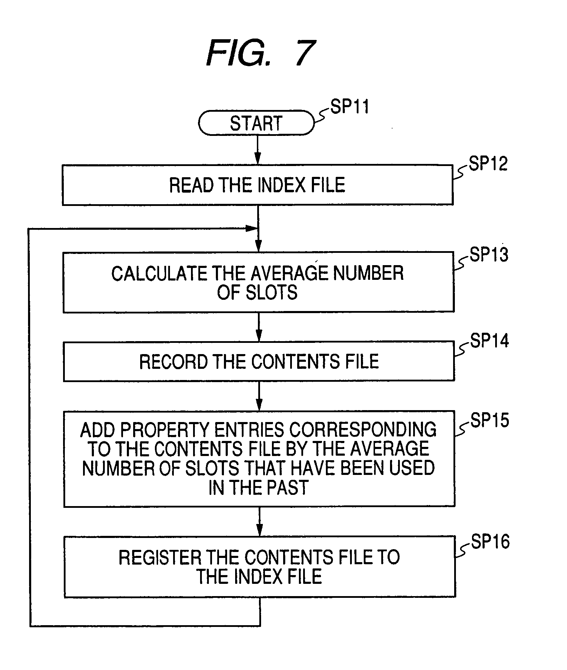

A flow chart shown in Fig. 7 depicts a series of the process procedures performed by the system control microcomputer 19 to update an index file.

For example, by installing the optical disk 2, the system control microcomputer 19 goes from Step SP11 to Step SP12. At Step SP12, the system control microcomputer 19 acquires the index file recorded on the optical disk 2, and stores it in the memory incorporated therein. Then, at Step SP13, the system control microcomputer 19 computes the average number of the slots that have been actually used in the past for registration of the contents file in accordance with data in the index file stored in the incorporated memory. In addition, here, the number of the slots that have been actually used is the number of the slots to which actual data is allocated, and is determined by the size (Property Data Size) of (actual) data allocated to the (actual) data portion (Property Data Payload) of the slot of the property entry (see Fig. 3).

Subsequently, at Step SP14, the system control microcomputer 19 records the contents file on the optical disk 2 in response to the recording instruction done by the user manipulation. Then, at Step SP15, the system control microcomputer 19 adds continuous slots by the average number of the slots determined at Step SP13 in the tail of the property file of the index file stored in the incorporated memory. In addition, at this time, also to the other files, slots are each added by the required number.

Then, at Step ST16, the system control microcomputer 19 allocates attribute information of the contents file recorded on the optical disk 2 to the added slots as described above, and registers the recorded contents file in the index file stored in the incorporated memory. Furthermore, the system control microcomputer 19 updates the index file recorded on the optical disk 2 in accordance with data in the index file stored in the incorporated memory.

Then, when a user manipulation further instructs that the contents file should be recorded, the system control microcomputer 19 returns to Step SP13 to repeat the process.

The system control microcomputer 19 determines the average number of the slots that have been actually used every time when the contents file is recorded, and secures the continuous slots by the average number of the slots to register the contents file.

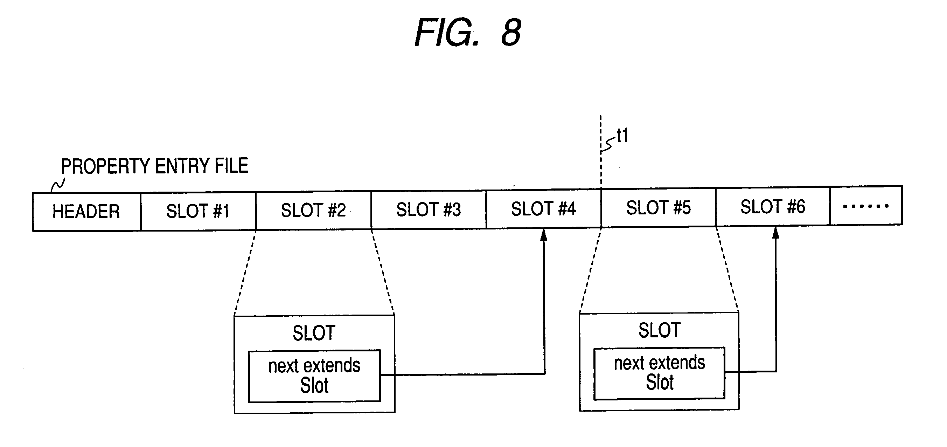

Fig. 8 shows an example of securing slots when slots are secured based on the average number of the slots that have been used in the past in order to register a contents file. For example, in the case in which an entry is newly added at time t1, when three property entries of slot #1, slots #2 and #4, and slot #3 are registered, the average number of slots is 1.33. Thus, the contents file is registered with two slots of slots #5 and #6. However, when a predetermined number is set to the average number of the slots that have been used in the past in order to register the contents file as described above, a recording area is sometimes short for registration of the contents file. In this case, the system control microcomputer 19 additionally registers a predetermined number of slots in the index file as well as arranges an index that indicates the subsequent slot (Next extends slot index) so as to indicate the additionally registered slots.

As described above, when a recording area is short for registration of the contents file, fragments sometime occur in the index file because a predetermined number of slots are additionally registered in the index file. However, even though fragments occur as described above, the contents file is registered with continuous slots by the average number of the slots that have been actually used in the past. Thus, as compared with the case in which a predetermined number of continuous slots are not secured as before, the occurrence of fragments can be reduced.

As described above, in the case in which the average number of the slots that have been actually used in the past is determined to update the number of the slots to be secured in the index file when the contents file is registered, instead of the process performed every time when the contents file is recorded, the process may be performed every time when a predetermined number of contents files are recorded.

In addition, as described above, instead of determining the average number of the slots that have been actually used in the past in accordance with the size (Property Data Size) of (actual) data allocated to the (actual) data portion (Property Data Payload) of the slot of the property entry, the average number of the slots that have been used in the past may be recorded in the header of the property file every time when the contents file is registered, and the records may be utilized. In this case, the average number of the slots that have been used in the past can be easily obtained from the records in the header.

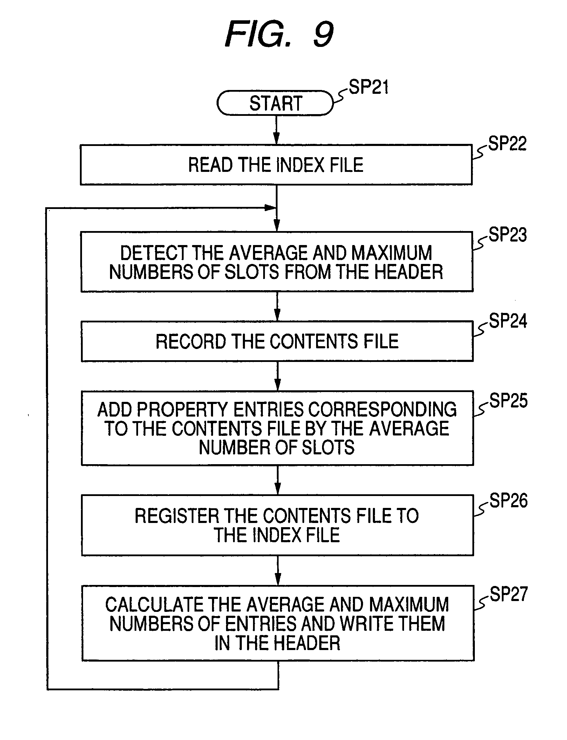

A flow chart shown in Fig. 9 depicts a series of the process procedures performed by the system control microcomputer 19 to update an index file.

For example, by installing the optical disk 2, the system control microcomputer 19 goes from Step SP21 to Step SP22. At Step SP22, the system control microcomputer 19 acquires the index file recorded on the optical disk 2, and stores it in the memory incorporated therein. Then, at Step SP23, the system control microcomputer 19 detects the average and maximum numbers of the slots that have been actually used in the past and recorded in the header of the property file in order to register the contents file.

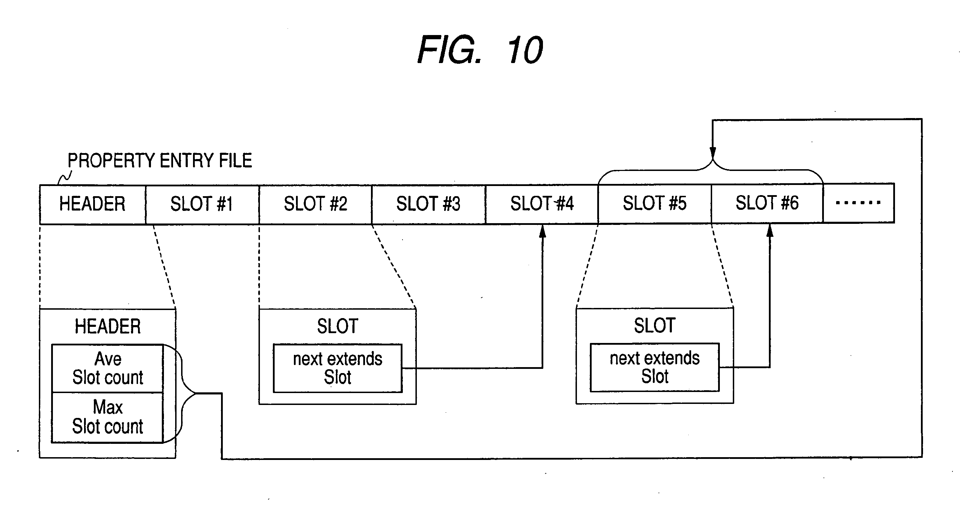

Here, as shown in Fig. 10, the average number of the slots (Ave Slot Count) and the maximum number of the slots (Max Slot Count) that have been actually used in the past are recorded in the header of the property file. The system control microcomputer 19 detects the average number (Ave Slot Count) of the slots and the maximum number of the slots (Max Slot Count) recorded in the header.

Subsequently, at Step SP24, the system control microcomputer 19 records the contents file on the optical disk 2 in response to the recording instruction done by a user manipulation. Then, at Step SP25, the system control microcomputer 19 adds the continuous slots in fixed length by the average number of the slots detected at Step SP23 in the tail of the property file of the index file stored in the incorporated memory. In addition, at this time, also to the other files, slots are each added by the required number.

Then, at Step SP26, the system control microcomputer 19 allocates attribute information of the contents file recorded on the optical disk 2 to the added slots as described above, and registers the recorded contents file in the index file stored in the incorporated memory.

Subsequently, at Step SP27, the system control microcomputer 19 corrects the average number of the slots (Ave Slot Count) and the maximum number of the slots (Max Slot Count) detected at Step SP23 in accordance with the number of the slots that have been actually used in order to register the contents file at Step SP26. Furthermore, the system control microcomputer 19 updates the header of the index file recorded in the incorporated memory in accordance with the corrected value, and updates the index file recorded on the optical disk 2 in accordance with data of the index file thus updated.

Then, when a user manipulation further instructs that the contents file should be recorded, the system control microcomputer 19 returns to Step SP23 to repeat the process.

The system control microcomputer 19 detects the average number of the slots that have been actually used from the records in the header every time when the contents file is recorded, and secures the average number of the continuous slots to register the contents file.

In addition, in the update process for the average number of the slots recorded in the header of the property file, instead of the process performed every time when the contents file is recorded, the process may be performed every time when a predetermined number of the contents files are recorded.

In addition, in the embodiment described above, in the case in which a predetermined number is the average number of the slots that have been used in the past in order to register the contents, instead of this, it may be also considered that a predetermined number is the maximum number of the slots that have been used in the past in order to register the contents.

Furthermore, in the embodiment described above, the case is described in which the invention is adapted to processing the property file. However, the invention is not limited thereto, which can be widely adapted as well to processing other files such as a text file in addition to the property file.

Furthermore, in the embodiment described above, the case is described in which the free space of a plurality of the slots of a single entry is recorded in accordance with the overall size (Property Data Area Size) of the (actual) data portion (Property Data Payload) and the size (Property Data Size) of actual data allocated to the (actual) data portion (Property Data Payload) with a plurality of the slots. However, the invention is not limited thereto. The size of the free space may be directly recorded.

Furthermore, in the embodiment described above, the case is described in which the invention is adapted to the optical disk apparatus. However, the invention is not limited thereto, which can be widely adapted to recording data on various recording media such as a hard disk and a memory card.

Furthermore, in the embodiment described above, the case is described in which a coder and a decoder, which are an encoder and a decoder, are formed in one piece. However, the invention is not limited thereto, which can be widely adapted as well to the case in which the encoder and the decoder are configured of processing by software, and to the case in which the encoder and the decoder are provided in external devices in which the external devices compress data to form video data and audio data for inputting and recording data.

### Industrial Field of Application

The invention suppresses the occurrence of fragments in the index file that manages individual contents files recorded on the recording medium, for example, which can be adapted to an optical disk apparatus which records the shot result.

## Claims

1. A recording apparatus which records target information and an index file on a recording medium, the target information that contains at least a contents file, a virtual folder or text data, and the index file that manages the target information and that is created of a set of items of attribute information relating to the target information, the recording apparatus comprising:
a recording part operable to record the target information on the recording medium; and
an index file updating part operable to update the index file corresponding to target information to be recorded so as to register the target information when the target information is recorded on the recording medium by the recording part,
wherein the index file is configured of a plurality of slots in fixed length, and
when the index file is updated, the index file updating part secures a predetermined number of continuous slots in fixed length in the index file, and allocates attribute information relating to the target information to be recorded by the recording part to the secured slots in fixed length.

2. The recording apparatus according to claim 1, wherein the predetermined number is a maximum number of slots to be expected for use in order to register the target information.

3. The recording apparatus according to claim 1, wherein the predetermined number is an average number of slots to be expected for use in order to register the target information, and
when a recording area is short for registration of the target information depending on the predetermined number of continuous slots in fixed length, the index file updating part secures a predetermined number of slots in fixed length in addition to the predetermined number of continuous slots in fixed length in order to register the target information.

4. The recording apparatus according to claim 1, wherein the predetermined number is the average number of slots that have been used in past in order to register the target information, and
when a recording area is short for registration of the target information depending on the predetermined number of continuous slots in fixed length, the index file updating part secures a predetermined number of slots in fixed length in addition to the predetermined number of continuous slots in fixed length in order to register the target information.

5. The recording apparatus according to claim 1, wherein the index file updating part records an average number of the slots in fixed length for use in order to register the target information in a header of the index file every time when the target information is registered in the index file,
the predetermined number is the average number recorded in the header of the index file, and
when a recording area is short for registration of the target information depending on the predetermined number of continuous slots in fixed length, the index file updating part secures a predetermined number of slots in fixed length in addition to the predetermined number of continuous slots in fixed length in order to register the target information.

6. The recording apparatus according to claim 1, wherein when the index file is updated so as to register the target information, the index file updating part records information that can identify a free space in a beginning slot in fixed length among the predetermined number of continuous slots in fixed length.

7. A recording method which records target information and an index file on a recording medium, the target information that contains at least a contents file, a virtual folder or text data, and the index file that manages the target information and that is created of a set of items of attribute information relating to the target information, the recording method comprising the steps of:
recording the target information on the recording medium; and
an index file updating part operable to update the index file corresponding to target information to be recorded so as to register the target information when the target information is recorded on the recording medium by the recording step,
wherein the index file is configured of a plurality of slots in fixed length, and
at the index file updating step, when the index file is updated, securing a predetermined number of continuous slots in fixed length in the index file, and allocating attribute information relating to the target information to be recorded by the recording part to the secured slots in fixed length.

8. A program which allows a computer to run a recording method to record target information and an index file on a recording medium, the target information that contains at least a contents file, a virtual folder or text data, and the index file that manages the target information and that is created of a set of items of attribute information relating to the target information, the recording method comprising the steps of:
recording the target information on the recording medium; and
an index file updating part operable to update the index file corresponding to target information to be recorded so as to register the target information when the target information is recorded on the recording medium by the recording step,
wherein the index file is configured of a plurality of slots in fixed length, and
at the index file updating step, when the index file is updated, securing a predetermined number of continuous slots in fixed length in the index file, and allocating attribute information relating to the target information to be recorded by the recording part to the secured slots in fixed length.

9. A computer-readable recording medium on which a program is recorded which allows a computer to run a recording method to record target information and an index file on a recording medium, the target information that contains at least a contents file, a virtual folder or text data, and the index file that manages the target information and that is created of a set of items of attribute information relating to the target information, the recording method comprising the steps of:
recording the target information on the recording medium; and
an index file updating part operable to update the index file corresponding to target information to be recorded so as to register the target information when the target information is recorded on the recording medium by the recording step,
wherein the index file is configured of a plurality of slots in fixed length, and
at the index file updating step, when the index file is updated, securing a predetermined number of continuous slots in fixed length in the index file, and allocating attribute information relating to the target information to be recorded by the recording part to the secured slots in fixed length.
